# EUROPEAN PATENT APPLICATION

(11) **EP 3 023 132 A1**
(43) Date of publication of application: **25.05.2016**
(21) Application number: 14825939.3
(22) Date of filing: 18.07.2014
(51) Int. Cl.: B01D 19/00, B01J 19/18, B01J 4/00

(54) **GAS-LIQUID SEPARATION APPARATUS**

(30) Priority: 18.07.2013 KR 20130084552
(71) Applicant: LG Chem, Ltd., Seoul 150-721 (KR)
(72) Inventor: SHIN, Dae Young, Daejeon 305-738 (KR); JOO, Eun Jung, Daejeon 305-738 (KR); HEO, Chang Hoe, Daejeon 305-738 (KR); LEE, Jong Ku, Daejeon 305-738 (KR)
(74) Representative: Goddar, Heinz J.
(86) International application number: PCT/KR2014/006534
(87) International publication number: WO 2015/009099

(57) **Abstract**

Provided is an apparatus for separating a gas and a liquid, the apparatus including a housing comprising a plurality of tubular columns that are able to be stacked in a height direction, a rotary shaft provided inthe housing, a driving unit configured to rotate the rotary shaft, a rotary cone mounted on the rotary shaft to be rotated about the rotary shaft and having a diameter reduced from an upper end section toward a lower end section, and a stationary cone mounted on the tubular column to be spaced apart from the rotary cone and formed in a tubular shape having a diameter reduced from the upper end section toward the lower end section.

## Description

### [Technical Field]

The present invention relates to an apparatus for separating a gas and a liquid, and more particularly, to an apparatus for separating a gas and a liquid, which is capable of varying a processing capacity.

### [Background Art]

In general, a reaction apparatus is needed to obtain a product through a chemical reaction. Such a reaction apparatus uses a batch chemical reactor in which a source material product is added to one reactor to perform agitation. However, when the batch-type reactor is used, since a sufficient reaction is not performed in a reaction requiring a high mass transfer rate, a large amount of non-reacted source material product may be generated. In addition, when a catalyst is used, since a process of separating the catalyst should be performed, cost may be increased.

While Korean Patent Registration No. 10-961,765 discloses a spinning disk reactor, since a spinning disk is horizontally disposed, a staying time of a source material reactant in the disk is reduced. Accordingly, a spinning cone column (SCC) capable of improving a staying time of the source material reactant by installing a disk having an inclination, i.e., a cone, is proposed.

The spinning cone column includes rotary cones and stationary cones, which are alternately provided inone column. However, assembly and disassembly of the apparatus when the size of the apparatus is increased becomes difficult, and extension of the apparatus becomes impossible when the processing capacity should be increased.

### [Summary of Invention]

### [Technical Problem]

An object of the present invention is to provide an apparatus for separating a gas and a liquid, which is capable of facilitating assembly and disassembly thereof.

Another object of the present invention is to provide an apparatus for separating a gas and a liquid, which is capable of expanding a processing capacity.

### [Solution to Problem]

In order to achieve the aforementioned objects, the present invention provides an apparatus for separating a gas and a liquid, the apparatus including: a housing comprising a plurality of tubular columns that are able to be stacked in a height direction; a rotary shaft provided inthe housing; a driving unit configured to rotate the rotary shaft; a rotary cone mounted on the rotary shaft to be rotated about the rotary shaft and having a diameter reduced from an upper end section toward a lower end section; and a stationary cone mounted on the tubular column to be spaced apart from the rotary cone and formed in a tubular shape having a diameter reduced from the upper end section toward the lower end section.

Here, two neighboring tubular columns may be separably mounted.

In addition, the stationary cone may be separably mounted on the tubular column.

In addition, the two neighboring tubular columns and the stationary cone may be fastened together.

In addition, the two neighboring tubular columns and the stationary cone may be separated together.

In addition, the stationary cone may include an extension section extending radially outward from the upper end section, and the extension section may be disposed between the two neighboring tubular columns.

In addition, an outer diameter of the extension section may be larger than an inner diameter of the tubular column.

In addition, a first fastening section may protrude outward from the extension section, a second fastening section protruding to correspond to the first fastening section may be formed at at least one of an upper end section of the tubular column and a lower end section of the tubular column, and the first fastening section and the second fastening section may be coupled through a fastening means.

In addition, the plurality of first fastening sections and the plurality of second fastening sections may be provided in a circumferential direction of the tubular column.

In addition, a fastening hole may be formed to pass through the extension section, a protrusion inserted into the fastening hole may be formed at any one of the upper end section of the tubular column and the lower end section of the tubular column, and a fastening groove into which the protrusion is inserted at a position corresponding to the fastening hole may be formed at the other one of the upper end section of the tubular column and the lower end section of the tubular column.

In addition, second fastening sections may be provided at the upper end section of the tubular column and the lower end section of the tubular column, respectively, and the two neighboring second fastening sections may be coupled through a fastening means.

In addition, the extension section may have an inclination corresponding to the upper end section of the tubular column or the lower end section of the tubular column.

In addition, the stationary cone may be integrally formed with the tubular column.

In addition, a second fastening section protruding outward may be formed at at least one of the upper end section of the tubular column and the lower end section of the tubular column, and the second fastening sections of the two neighboring tubular columns may be coupled through a fastening means.

In addition, heights of the stationary cones formed at the tubular columns may be different from each other.

In addition, the stationary cone may be welded to the tubular column.

In addition, the plurality of tubular columns may have heights reduced from the upper end section toward the lower end section of the housing.

In addition, the plurality of tubular columns may have heights increased from the upper end section toward the lower end section of the housing.

In addition, the plurality of tubular columns may have heights reduced and then increased from the upper end section toward the lower end section of the housing.

In addition, the plurality of tubular columns may have heights increased and then decreased from the upper end section toward the lower end section of the housing.

### [Advantageous Effects of Invention]

As described above, the apparatus for separating a gas and a liquid related to at least one embodiment of the present invention has the following effects.

The apparatus includes a plurality of tubular columns that can be stacked in a height direction. Accordingly, assembly and disassembly thereof are facilitated, and the apparatus can be easily expanded when the processing capacity is needed to be increased.

### [Brief Description of Drawings]

Fig. 1 is an exploded perspective view of an apparatus for separating a gas and a liquid according to an embodiment of the present invention;
Figs. 2 to 4 are cross-sectional views of the apparatus for separating a gas and a liquid according to the embodiment of the present invention;
Fig. 5 is an exploded perspective view showing a fastening hole, a protrusion, and a fastening groove that are added to the apparatus for separating a gas and a liquid shown in Fig. 1;
Figs. 6 to 9 are cross-sectional views showing the fastening hole, the protrusion, and the fastening groove that are added to the apparatus for separating a gas and a liquid shown in Fig. 2;
Fig. 10 is a cross-sectional view showing a state in which inclinations are formed at upper and lower ends of a tubular column of the apparatus for separating a gas and a liquid shown in Fig. 2;
Figs. 11 to 13 are cross-sectional views showing states in which an extension section is removed from the apparatus for separating a gas and a liquid shown in Fig. 2;
Figs. 14 to 16 are cross-sectional views showing states in which a stationary cone is integrally formed with a tubular column in the apparatus for separating a gas and a liquid shown in Fig. 2;
Figs. 17 to 20 are cross-sectional views showing states in which heights of a plurality of tubular columns are different in the apparatus for separating a gas and a liquid shown in Fig. 2; and
Figs. 21 and 22 are cross-sectional views for describing an operation state of the apparatus for separating a gas and a liquid according to the present invention.

### [Description of Embodiments]

Hereinafter, an apparatus for separating a gas and a liquid according to various embodiments of the present invention will be described in detail with reference to the accompanying drawings.

In addition, throughout the specification, the same reference numerals designate the same elements, and detailed description thereof will be omitted. For convenience of the description, sizes and shapes of the elements shown in the drawings may be exaggerated or downsized.

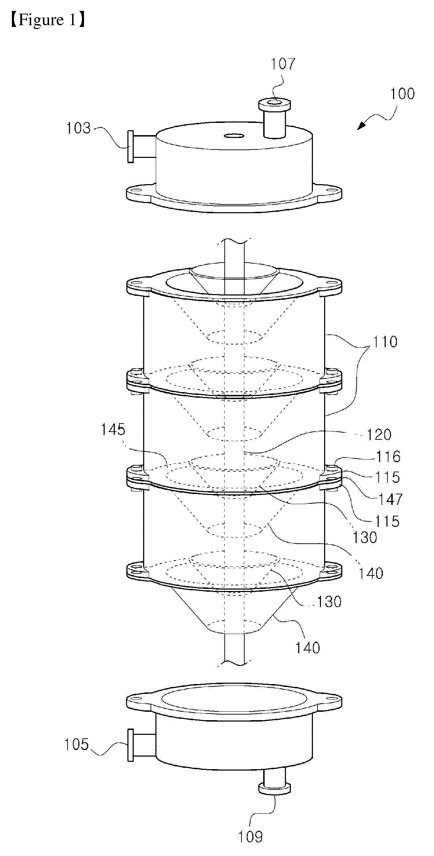

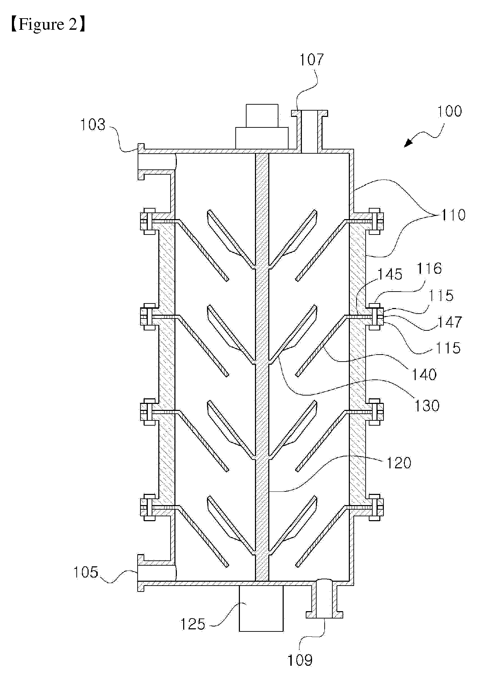

Fig. 1 is an exploded perspective view of an apparatus for separating a gas and a liquid according to an embodiment of the present invention, and Figs. 2 to 4 are cross-sectional views of the apparatus for separating a gas and a liquid according to the embodiment of the present invention.

Referring to Figs. 1 to 4, the apparatus for separating a gas and a liquid according to the embodiment of the present invention includes a housing 100, a rotary shaft 120 provided inthe housing 100, and a driving unit 125 configured to rotate the rotary shaft 120.

Here, the housing 100 includes a plurality of tubular columns 110 that can be stacked in a height direction.

In addition, the apparatus for separating a gas and a liquid includes a rotary cone 130 mounted on the rotary shaft 120 to be rotated about the rotary shaft 120 and having a diameter reduced from an upper end section toward a lower end section, and a stationary cone 140 mounted on the tubular column 110 to be spaced apart from the rotary cone 130 and formed in a tubular shape having a diameter reduced from the upper end section toward the lower end section.

The housing 100 has a space for accommodating the rotary shaft 120, the rotary cone 130 and the stationary cone 140, and is formed in a tubular shape extending in the height direction. Here, the housing 100 is constituted by stacking N (N is a natural number of 2 or more) tubular columns 110 in a multi-stage. That is, the housing 100 can be formed by stacking the N tubular columns 110 in the height direction and coupling the neighboring tubular columns 110.

Accordingly, the housing 100 can be easily assembled by stacking the tubular columns 110 one by one, and the housing 100 can be easily disassembled by separating the tubular columns 110 one by one. In addition, when a processing capacity of the apparatus for separating a gas and a liquid needs to be increased, the processing capacity of the apparatus for separating a gas and a liquid can be increased by additionally stacking and assembling the tubular columns 110.

In order to increase an assembly and disassembly operation efficiency, the two neighboring tubular columns 110 can be separably mounted or assembled. In addition, the stationary cone 140 may be separably mounted on the tubular column 110.

In the embodiment, the two neighboring tubular columns 110 and the stationary cone 140 can be fastened together. In addition, the two neighboring tubular columns 110 and the stationary cone 140 can be separated together. Specifically, the two neighboring tubular columns 110 and the stationary cone 140 can be fastened together through one fastening means 116. Similarly, as the one fastening means 116 is removed, the two neighboring tubular columns 110 and the stationary cone 140 can be separated from each other.

First, a structure for connecting the two neighboring tubular columns 110 will be described. Each of the tubular columns 110 may have a second fastening section 115 protruding outward from at least one of an upper end section and a lower end section. The second fastening sections may be provided at the upper end section of the tubular column 110 and the lower end section of the tubular column 110.

In a state in which the two neighboring tubular columns 110 are stacked in the height direction, the two neighboring second fastening sections 115 may be coupled through the fastening means 116. Here, the fastening means 116 can pass through at least one of the second fastening sections 115.

Meanwhile, for the convenience of description, a tubular column disposed at an upper side of Fig. 1 is referred to as a first tubular column, and a tubular column disposed under the first tubular column is referred to as a second tubular column. Here, the first tubular column and the second tubular column are stacked and adjacent to each other in the height direction.

The second fastening sections 115 protruding outward may be provided at the first tubular column and the second tubular column. In the embodiment, the second fastening section 115 of the first tubular column may be provided at the lower end section of the first tubular column, and the second fastening section 115 of the second tubular column may be provided at the upper end section of the second tubular column. Of course, the second fastening section 115 may be provided at the upper end section of the first tubular column, and the second fastening section 115 may be provided at the lower end section of the second tubular column. Here, the plurality of second fastening sections 115 may be provided in the circumferential direction of the tubular column.

Here, the second fastening section 115 provided at the lower end section of the first tubular column and the second fastening section 115 provided at the upper end section of the second tubular column can be fastened through the fastening means 116. Dissimilarly, here, the second fastening section 115 provided at the lower end section of the first tubular column and the second fastening section 115 provided at the upper end section of the second tubular column may be welded.

In addition, the tubular column 110 may be formed of, for example, stainless steel, but is not limited thereto.

In addition, the housing 100 may include a first supply section 103 configured to supply a reactant into the housing 110, and a second supply section 105 configured to supply a gas into the housing 100.

Here, since the reactant is moved downward by the gravity (toward the lower end section in the height direction), the first supply section 103 for supplying the reactant may be installed at the tubular column 110 disposed at an uppermost side. Here, at least two first supply sections 103 may be provided to supply two or more reactants.

In addition, since the gas reacts with the reactant while moving to the upper side opposite to the reactant (toward the upper end section in the height direction), the second supply section 105 for supplying the gas may be provided at the tubular column 110 disposed at a lowermost side.

Meanwhile, the housing 100 may include a discharge section 107 configured to discharge the remaining gas from the housing 100, and a collecting section 109 configured to collect products from the housing 100.

Here, since the remaining gas is a gas after a reaction with the reactant while moving toward the upper side of the housing 100, the discharge section 107 configured to discharge the remaining gas may be provided at the tubular column 110 disposed at the uppermost side.

In addition, since the product is generated through a gas reaction or gas processing while the reactant moves toward a lower side of the housing 100, the collecting section 109 configured to collect the products can be installed at the tubular column 110 disposed at the lowermost side.

That is, the first supply section 103 and the discharge section 107 may be installed at the tubular column 110 disposed at the uppermost side, and the second supply section 105 and the collecting section 109 may be installed at the tubular column 110 disposed at the lowermost side. For the convenience of description, the tubular column in which the first supply section 103 and the discharge section 107 are provided may be referred to as an upper end cap, and the tubular column in which the second supply section 105 and the collecting section 109 are provided may be referred to as a lower end cap. Here, the above-mentioned second fastening sections 115 may be provided at the upper and lower end caps.

However, positions of the first supply section 103, the second supply section 105, the discharge section 107 and the collecting section 109 are exemplary and not limited to the above-mentioned positions.

For example, referring to Fig. 2, the first supply section 103 may be formed at a side surface of the tubular column 110, and the discharge section 107 may be formed at an upper surface of the tubular column 110.

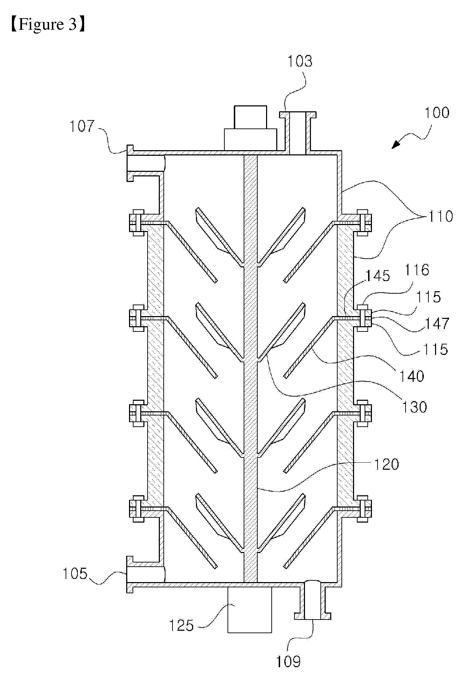

Dissimilarly, referring to Fig. 3, the first supply section 103 may be formed on the upper surface of the tubular column 110, and the discharge section 107 may be formed at the side surface of the tubular column 110.

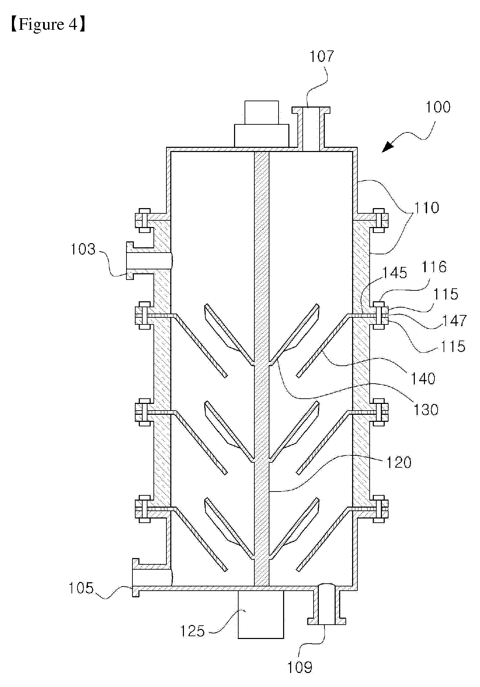

Additionally, the first supply section 103 and the discharge section 107 may be installed at an n^{th} (n is a natural number of 2 or more) tubular column 110 from the uppermost side, other than the tubular column 110 (the upper end cap) disposed at the uppermost side. For example, referring to Fig. 4, the first supply section 103 may be installed at the second tubular column 110 from the uppermost side. Similarly, the second supply section 105 and the collecting section 109 may be installed at the n^{th} (n is a natural number of 2 or more) tubular column 110 from the lowermost side, other than the tubular column 110 disposed at the lowermost side.

The rotary shaft 120 functions to rotate the rotary cone 130, and is formed in the housing 100 in the height direction (for example, a vertical direction) of the housing 100.

Here, the rotary shaft 120 is connected to the driving unit 125 such as a motor, and the driving unit 125 functions to rotate the rotary shaft 120.

Meanwhile, the rotary cone 130 is mounted on the rotary shaft 120 to be rotated about the rotary shaft 120. In addition, the rotary cone 130 may have a diameter reduced from the upper end toward the lower end in the height direction of the housing 100. Specifically, the rotary cone 130 may be formed in a tubular shape having a diameter reduced from the upper end toward the lower end. In addition, the rotary cone 130 may be generally formed in a "V" shape, based on a longitudinal cross sectional view.

The lower end section of the rotary cone 130 is installed at the rotary shaft 120. When the reactant is input into the rotary cone 130, the reactant is spread along the rotary cone 130 by the centrifugal force, moved to the upper end, and then, transferred to the stationary cone 140 disposed at the lower side.

In addition, the stationary cone 140 is fixed to the housing 100 to be spaced apart from the rotary cone 130. In addition, the stationary cone 140 may have a diameter reduced from the upper end toward the lower end in the height direction of the housing 100. Specifically, the stationary cone 140 may be formed in a tubular shape having a diameter reduced from the upper end toward the lower end. The stationary cone 140 may be generally formed in a "V" shape, based on a longitudinal cross sectional view.

In addition, the stationary cone 140 may be fixed in the tubular column 110 or between the two neighboring tubular columns 110. In addition, the stationary cone 140 is integrally or separably fixed to the tubular column 110. Meanwhile, the stationary cone 140 may be integrally formed with the tubular column 110.

In addition, since the stationary cone 140 is spaced apart from the rotary cone 130 and formed in a shape surrounding the outside of the rotary cone 130, the stationary cone 140 can receive the reactant from the rotary cone 130. In addition, the stationary cones 140 and the rotary cones 130 may be alternately provided.

Here, a size or an interval of the stationary cones 140 and the rotary cones 130 may be adjusted. As described above, as the size or interval of the stationary cone 140 and the rotary cone 130 are adjusted, it is possible to appropriately deal with properties of various reactants.

Meanwhile, the stationary cone 140 is separately formed from the tubular column 110, and may be fixed to the tubular column 110 by various methods such as the fastening means 116, welding, or the like.

In the embodiment, the stationary cone 140 may include an extension section 145 extending radially outward from the upper end section. An outer diameter of the extension section 145 may be larger than an inner diameter of the tubular column 110. Accordingly, the extension section 145 may be disposed between the two neighboring tubular columns 110. Specifically, the extension section 145 may be disposed between the lower end of the first tubular column and the upper end of the second tubular column.

Here, a first fastening section 147 protruding outward from the extension section 145 may be formed at the stationary cone 140. In addition, the second fastening section 115 protruding to correspond to the first fastening section 147 may be formed at at least one of the upper end of the tubular column 110 and the lower end of the tubular column 110. In addition, the plurality of first fastening sections 147 and the plurality of second fastening sections 115 may be provided in the circumferential direction of the tubular column 110.

Here, the first fastening section 147 and the second fastening section 115 may be coupled through the fastening means 116 such as a screw, a bolt, or the like, or welding.

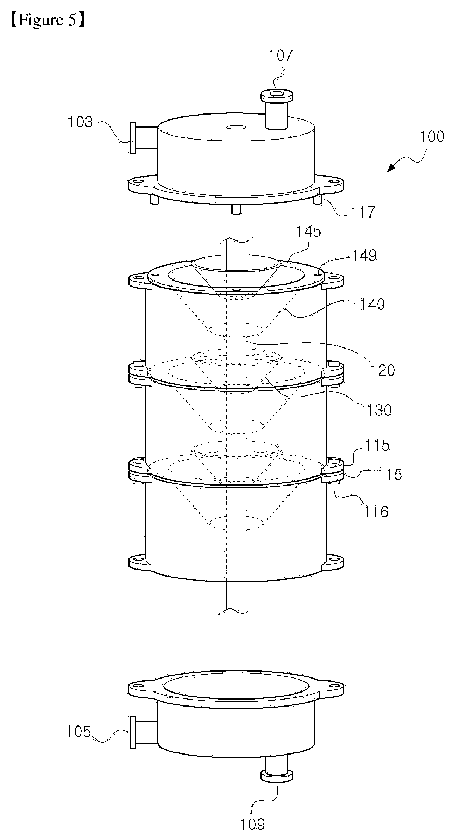

Fig. 5 is an exploded perspective view showing a state in which a fastening hole, a protrusion, and a fastening groove are added to the apparatus for separating a gas and a liquid shown in Fig. 1, and Figs. 6 to 9 are cross-sectional views showing a state in which the fastening hole, the protrusion, and the fastening groove are added to the apparatus for separating a gas and a liquid shown in Fig. 2.

Referring to Figs. 5 to 9, the extension section 145 may be coupled to the tubular column 110 using a fastening hole 149 and a protrusion 117.

Specifically, the fastening hole 149 passing therethrough in the vertical direction may be formed in the extension section 145.

In addition, the protrusion 117 inserted into the fastening hole 149 may be formed at any one of the upper end section of the tubular column 110 and the lower end section of the tubular column 110, and a fastening groove 119 into which the protrusion 117 is inserted at a position corresponding to the fastening hole 149 may be formed at the other one of the upper end section of the tubular column 110 and the lower end section of the tubular column 110.

Specifically, the protrusion 117 inserted into the fastening hole 149 may be provided at the lower end of the tubular column 110, and the fastening groove 119 may be provided at the upper end of the tubular column 110 at a position corresponding to the fastening hole 149. Accordingly, after the fastening grooves 119 formed at the fastening hole 149 of the extension section 145 and the upper end of the tubular column 110 are aligned, when the protrusion 117 formed at the lower end of the tubular column 110 is inserted thereinto, the extension section 145 of the stationary cone 140 can be fixed between the upper end of the tubular column 110 and the lower end of the tubular column 110.

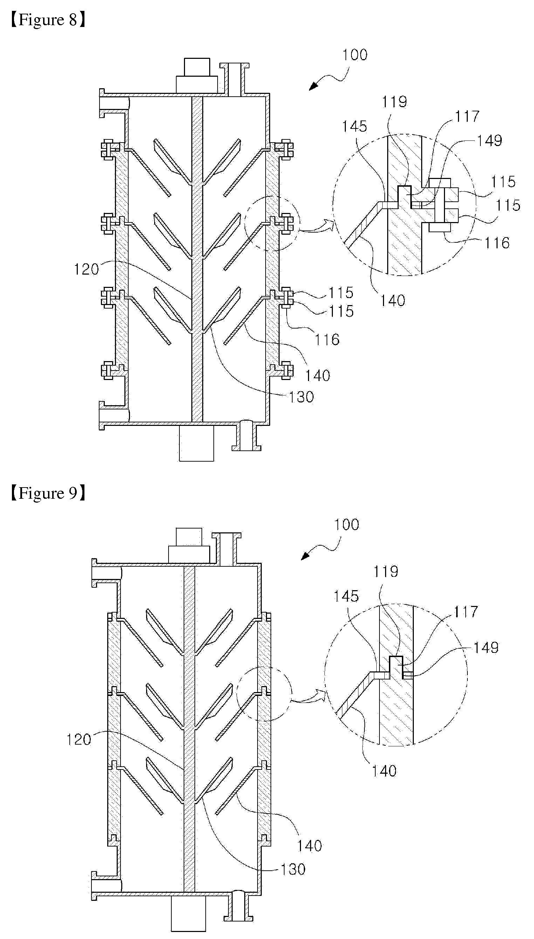

However, the protrusion 117 may not be formed at the lower end of the tubular column 110, and the fastening groove 119 may not be formed at the upper end of the tubular column 110. Referring to Figs. 8 and 9, the protrusion 117 may be formed at the upper end of the tubular column 110, and the fastening groove 119 may be formed at the lower end of the tubular column 110.

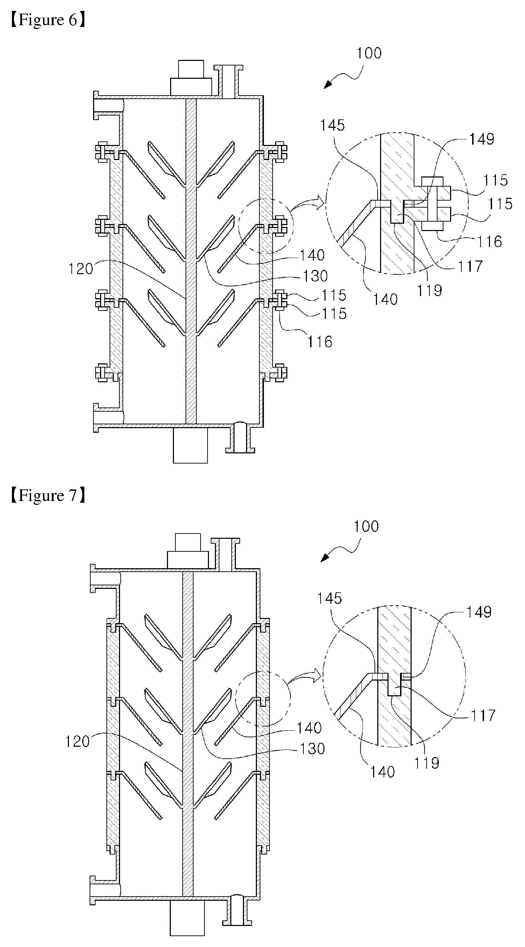

In addition, referring to Figs. 6 and 8, the fastening means 116 such as a screw, a bolt, or the like, can be inserted into the second fastening section 115 to couple the neighboring tubular columns 110.

Dissimilarly, referring to Figs. 7 and 9, the neighboring tubular columns 110 can be coupled using the protrusion 117 and the fastening groove 119 without the second fastening section 115. Here, the protrusion 117 and the fastening groove 119 may be coupled through welding, or threadedly coupled by forming threads on the protrusion 117 and the fastening groove 119.

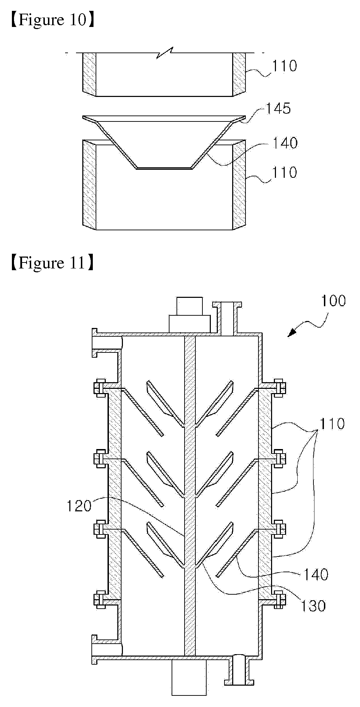

Fig. 10 is a cross-sectional view showing a state in which inclinations are formed at upper and lower ends of the tubular column of the apparatus for separating a gas and a liquid shown in Fig. 2.

Referring to Fig.10, when the inclinations are formed at the upper end of the tubular column 110 and the lower end of the tubular column 110, the extension section 145 of the stationary cone 140 may also have an inclination corresponding to the upper end of the tubular column 110 and the lower end of the tubular column 110.

Meanwhile, the extension section 145 may not be formed at the stationary cone 140.

Figs. 11 to 13 are cross-sectional views showing a state in which the extension section is removed from the apparatus for separating a gas and a liquid shown in Fig. 2. The stationary cone 140 may be integrally formed with the tubular column 110 or may be directly coupled thereto through welding. Here, formed heights (fixed positions) of the stationary cones 140 formed at the tubular columns 110 may be different from each other.

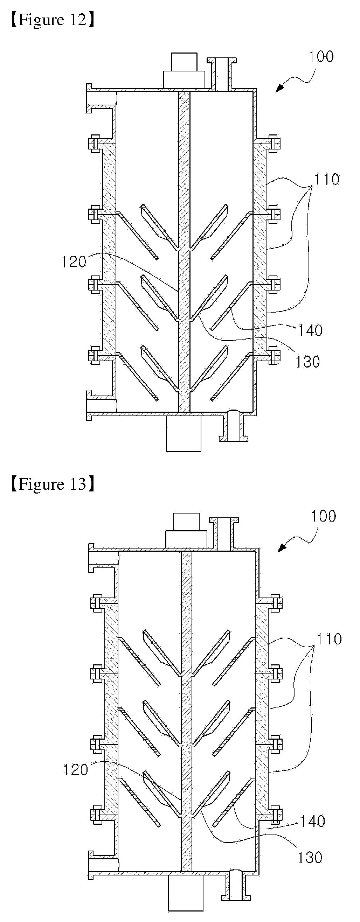

For example, referring to Figs. 11 to 13, the upper end section of the stationary cone 140 may be directly coupled to an inner surface of the tubular column 110 through welding. Here, referring to Fig. 11, the upper end section of the stationary cone 140 may be coupled to the upper end section of the tubular column 110. Referring to Fig. 12, the upper end section of the stationary cone 140 may be coupled to the lower end section of the tubular column 110. Referring to Fig. 13, the upper end section of the stationary cone 140 may be coupled between the upper end and the lower end of the tubular column 110.

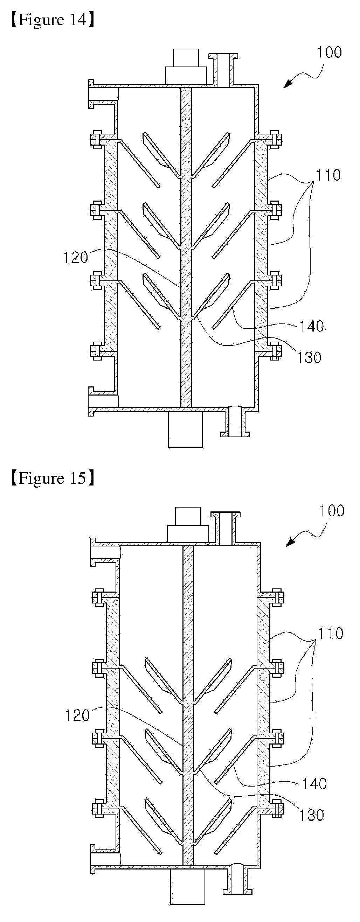

Figs. 14 to 16 are cross-sectional views showing a state in which the stationary cone is integrally formed with the tubular column in the apparatus for separating a gas and a liquid shown in Fig. 2.

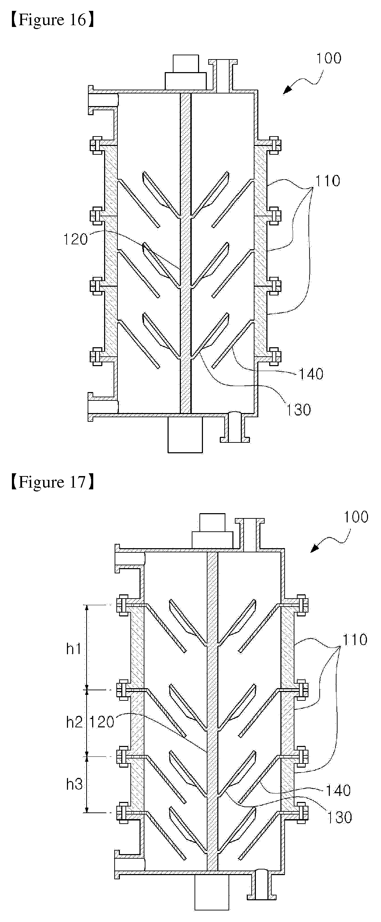

Referring to Figs. 14 to 16, the stationary cone 140 may be integrally formed with the tubular column 110. That is, the stationary cone 140 may extend from the inner surface of the tubular column 110. Referring to Fig. 14, the upper end section of the stationary cone 140 may extend from the upper end section of the tubular column 110. In addition, referring to Fig. 15, the upper end section of the stationary cone 140 may extend from the lower end section of the tubular column 110. In addition, referring to Fig. 16, the upper end section of the stationary cone 140 may extend from a position between the upper end and the lower end of the tubular column 110.

Figs. 17 to 20 are cross-sectional views showing a state in which heights of the plurality of tubular columns are different in the apparatus for separating a gas and a liquid shown in Fig. 2.

While the heights of the N tubular columns 110 may be equal to each other, it is not limited thereto, the heights may be different from each other.

For example, referring to Fig. 17, the N tubular columns 110 may have heights reduced from the upper end toward the lower end of the housing 100 (h1 > h2 > h3). As described above, when the heights of the tubular column 110 are reduced from the upper end section toward the lower end section of the housing 100, a moving path of a removing target can be secured to enable smooth movement of the reactant, and operation efficiency can be improved. In particular, it is useful for removal of the remaining monomer in the polymer including a volatile monomer.

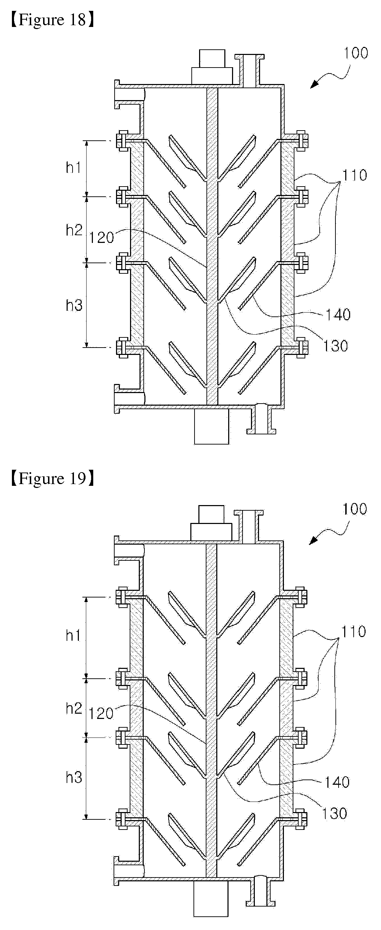

In addition, referring to Fig. 18, the heights of the N tubular columns 110 may be increased from the upper end section toward the lower end section of the housing 100 (h1 < h2 < h3).

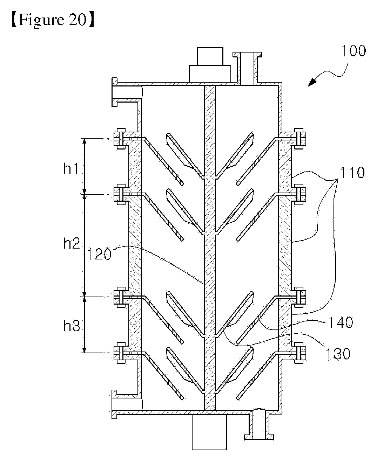

In addition, referring to Figs. 19 and 20, the heights of the N tubular columns 110 may be decreased and then increased from the upper end section toward the lower end section of the housing 100 (h1 > h2, h2 < h3, see Fig. 19).

In the embodiment, a height h1 of the tubular column disposed at the uppermost end of the housing 100 and a height h3 of the tubular column disposed at the lowermost end of the housing 100 may be larger than a height h2 of the tubular column disposed at a center of the housing 100. In addition, a plurality of tubular columns having the same height h2 can be sequentially stacked at the center of the housing 100. In addition, the height h1 of the tubular column disposed at the uppermost end of the housing 100 may be equal to the height h3 of the tubular column disposed at the lowermost end of the housing 100.

Dissimilarly, the heights of the N tubular columns 110 may be increased and then reduced from the upper end section toward the lower end section of the housing 100 (h1 < h2, h2 > h3, see Fig. 20). As described above, as the heights of the N tubular columns 110 are variously adjusted, effects of reactions and processing performed in the housing 100 can be maximized.

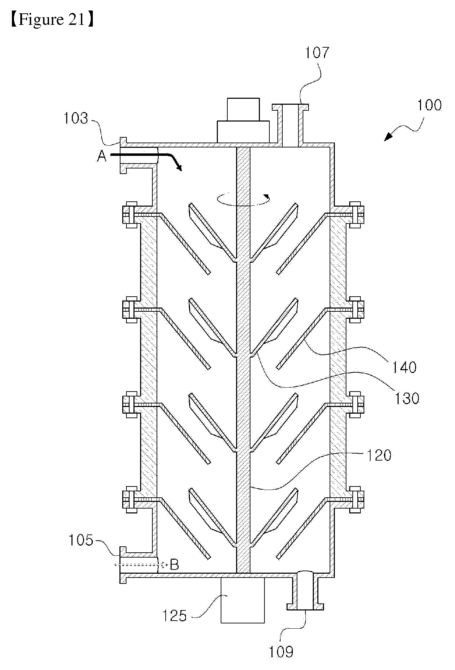

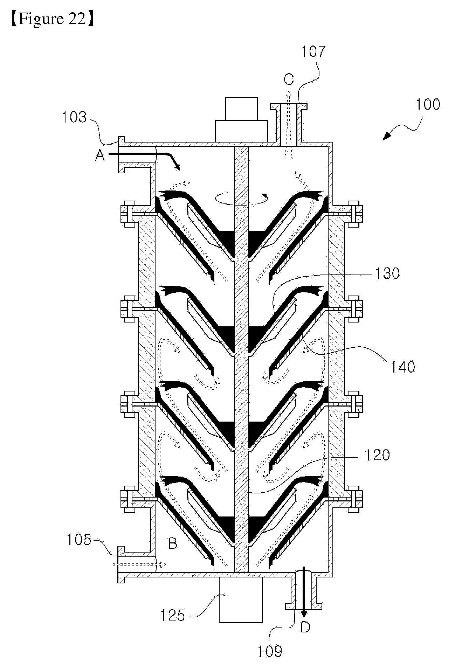

Figs. 21 and 22 are cross-sectional views for describing an operation state of the apparatus for separating a gas and a liquid according to the present invention.

Referring to Fig. 21, the driving unit 125 is operated to rotate the rotary cone 130, the reactant is supplied into the housing 100 through the first supply section 103 (A), and the gas is supplied into the housing 100 through the second supply section 105 (B).

Here, the reactant is not particularly limited as long as the polymer includes the volatile monomer, and may be selected from the group consisting of, for example, PVC, SBR, NBR, ABS, and PBL latex. In addition, the gas may be high temperature steam that can supply heat to the reactant.

Referring to Fig. 22, the reactant supplied into the housing 100 is conveyed to the rotary cone 130, and then, moved to the upper end of the rotary cone 130 by centrifugal force. Next, the reactant is separated from the rotary cone 130 to be transferred to the stationary cone 140.

The reactant transferred to the stationary cone 140 is moved to the lower end of the stationary cone 140 along the inclination of the stationary cone 140, and then, separated from the stationary cone 140 to be transferred to the rotary cone 130.

Meanwhile, the gas supplied into the housing 100 reacts with the reactant while moving upward. Here, since the reactant is thinly spread by the centrifugal force of the rotary cone 130, the gas and the reactant can react with each other in a large area. As described above, when the reactant reacts with the gas, the volatile organic compound of the reactant is removed, and the remaining gas including the volatile organic compound and the gas is discharged to the discharge section 107 (C).

In addition, the reactant (product) from which the volatile organic compound is removed is collected in the collecting section 109 (D). Meanwhile, in order to effectively perform the reaction between the reactant and the gas, the pressure in the housing 100 may be decompressed or compressed.

As described above, the apparatus for separating a gas and a liquid according to the present invention may be a gas/liquid reactor for causing the reactant to react with the gas to remove the volatile organic compound from the reactant. However, the reactant and the gas may not be chemically reacted with each other. For example, the apparatus for separating a gas and a liquid according to the present invention may be used to separate a material through a contact with a gas. Specifically, a liquefied mixture may be used to come in contact with a gas (in particular, a high temperature gas) to separate a material (for example, a volatile material or the like) contained in the mixture.

However, the mixture is not limited to a two-phase ingredient mixture in which a gaseous material is dissolved in a liquefied material but may be a three-phase ingredient material in which a solid material is further contained. That is, the apparatus for separating a gas and a liquid according to the present invention may be used to separate the three-phase ingredient material as well as the two-phase ingredient material.

As described above, although the preferable embodiments of the present invention have been shown and described, it will be appreciated by those skilled in the art that substitutions, modifications and variations may be made in these embodiments without departing from the principles and spirit of the general inventive concept, the scope of which is defined in the appended claims and their equivalents.

## Claims

1. An apparatus for separating a gas and a liquid, the apparatus comprising:
a housing comprising a plurality of tubular columns that are able to be stacked in a height direction;
a rotary shaft provided in the housing;
a driving unit configured to rotate the rotary shaft;
a rotary cone mounted on the rotary shaft to be rotated about the rotary shaft and having a diameter reduced from an upper end section toward a lower end section; and
a stationary cone mounted on the tubular column to be spaced apart from the rotary cone and formed in a tubular shape having a diameter reduced from the upper end section toward the lower end section.

2. The apparatus for separating a gas and a liquid according to claim 1, wherein two neighboring tubular columns are separably mounted.

3. The apparatus for separating a gas and a liquid according to claim 1, wherein the stationary cone is separably mounted on the tubular column.

4. The apparatus for separating a gas and a liquid according to claim 2, wherein the two neighboring tubular columns and the stationary cone are fastened together.

5. The apparatus for separating a gas and a liquid according to claim 2, wherein the two neighboring tubular columns and the stationary cone are separated together.

6. The apparatus for separating a gas and a liquid according to claim 1, wherein the stationary cone comprises an extension section extending radially outward from the upper end section, and
the extension section is disposed between the two neighboring tubular columns.

7. The apparatus for separating a gas and a liquid according to claim 6, wherein an outer diameter of the extension section is larger than an inner diameter of the tubular column.

8. The apparatus for separating a gas and a liquid according to claim 6, wherein a first fastening section protrudes outward from the extension section,
a second fastening section protruding to correspond to the first fastening section is formed at at least one of an upper end section of the tubular column and a lower end section of the tubular column, and
the first fastening section and the second fastening section are coupled through a fastening means.

9. The apparatus for separating a gas and a liquid according to claim 6, wherein the plurality of first fastening sections and the plurality of second fastening sections are provided in a circumferential direction of the tubular column.

10. The apparatus for separating a gas and a liquid according to claim 6, wherein a fastening hole is formed to pass through the extension section;
a protrusion inserted into the fastening hole is formed at any one of the upper end section of the tubular column and the lower end section of the tubular column, and
a fastening groove into which the protrusion is inserted at a position corresponding to the fastening hole is formed at the other one of the upper end section of the tubular column and the lower end section of the tubular column.

11. The apparatus for separating a gas and a liquid according to claim 10, wherein second fastening sections are provided at the upper end section of the tubular column and the lower end section of the tubular column, respectively, and
the two neighboring second fastening sections are coupled through a fastening means.

12. The apparatus for separating a gas and a liquid according to claim 6, wherein the extension section has an inclination corresponding to the upper end section of the tubular column or the lower end section of the tubular column.

13. The apparatus for separating a gas and a liquid according to claim 1, wherein the stationary cone is integrally formed with the tubular column.

14. The apparatus for separating a gas and a liquid according to claim 13, wherein a second fastening section protruding outward is formed at at least one of the upper end section of the tubular column and the lower end section of the tubular column, and
the second fastening sections of two neighboring tubular columns are coupled through a fastening means.

15. The apparatus for separating a gas and a liquid according to claim 1, wherein heights of the stationary cones formed at the tubular columns are different from each other.

16. The apparatus for separating a gas and a liquid according to claim 1, wherein the stationary cone is welded to the tubular column.

17. The apparatus for separating a gas and a liquid according to claim 1, wherein the plurality of tubular columns have heights reduced from the upper end section toward the lower end section of the housing.

18. The apparatus for separating a gas and a liquid according to claim 1, wherein the plurality of tubular columns have heights increased from the upper end section toward the lower end section of the housing.

19. The apparatus for separating a gas and a liquid according to claim 1, wherein the plurality of tubular columns have heights reduced and then increased from the upper end section toward the lower end section of the housing.

20. The apparatus for separating a gas and a liquid according to claim 1, wherein the plurality of tubular columns have heights increased and then decreased from the upper end section toward the lower end section of the housing.
